(19) Europäisches Patentamt
European Patent Office
Office européen des brevets

(11) **EP 3 441 987 B1**

(12) **EUROPEAN PATENT SPECIFICATION**

(45) Date of publication and mention of the grant of the patent:
**27.11.2019 Bulletin 2019/48**

(51) Int Cl.:
***H01F 1/01*** *(2006.01)*          ***F25B 21/00*** *(2006.01)*

(21) Application number: **18159513.3**

(22) Date of filing: **01.03.2018**

(54) **WIRE, HEAT EXCHANGER, AND MAGNETIC HEAT PUMP DEVICE**

DRAHT, WÄRMETAUSCHER UND MAGNETISCHE WÄRMEPUMPENVORRICHTUNG

FIL, ÉCHANGEUR DE CHALEUR ET DISPOSITIF DE POMPE À CHALEUR MAGNÉTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.08.2017 JP 2017155813**

(43) Date of publication of application:
**13.02.2019 Bulletin 2019/07**

(73) Proprietor: **Fujikura, Ltd.**
**Tokyo 135-8512 (JP)**

(72) Inventors:
• **Nomura, Ryujiro**
  **Chiba, 285-8550 (JP)**
• **Kizaki, Takeshi**
  **Chiba, 285-8550 (JP)**
• **Takeuchi, Katsuhiko**
  **Chiba, 285-8550 (JP)**
• **Kondo, Masahiro**
  **Chiba, 285-8550 (JP)**
• **Ishikawa, Kohki**
  **Chiba, 285-8550 (JP)**

(74) Representative: **Ter Meer Steinmeister & Partner Patentanwälte mbB**
**Artur-Ladebeck-Strasse 51**
**33617 Bielefeld (DE)**

(56) References cited:
**JP-A- 2013 064 588      JP-A- 2017 072 332**
**US-A1- 2011 173 993**

**Description**

TECHNICAL FIELD

The present invention relates to a wire used in a magnetic heat pump device using a magnetocaloric effect, and a heat exchanger and a magnetic heat pump device including the wire.

BACKGROUND ART

In order to suppress an increase in pressure loss, a heat exchanger is known in which a plurality of linear magnetic bodies are inserted in a tubular casing while being overlapped in a direction intersecting the longitudinal direction of the magnetic body (for example, see Patent Documents 1 and 2.).

CITATION LIST

PATENT DOCUMENT

Patent Document 1: JP 2013-64588 A
Patent Document 2: JP 2017-72332 A

SUMMARY OF THE INVENTION

PROBLEM TO BE SOLVED BY THE INVENTION

When a magnetic heat pump device reaches a steady state, a temperature gradient is generated in the heat exchanger so that a uniform temperature span is formed between a high temperature end and a low temperature end of the heat exchanger. It is desirable that the temperature span become wider and thus the applicability of the magnetic heat pump increases. However, there is a problem in which the above-described linear magnetic body has a narrow temperature span compared to a granular magnetic body.
An object of the invention is to provide a wire capable of obtaining a wide temperature span and a heat exchanger and a magnetic heat pump device including the wire.

MEANS FOR SOLVING PROBLEM

[1] A wire according to the invention is a wire which is formed of a magnetocaloric material having a magnetocaloric effect, in which an outer surface of the wire partially has at least one of a concave portion and a convex portion in a longitudinal direction of the wire, the concave potion is recessed in a radial direction of the wire, and the convex portion protrudes in the radial direction.
[2] In the above-described invention, the wire may have a non-circular cross-sectional shape, and a cross-sectional shape at one position in the longitudinal direction and a cross-sectional shape at the other position in the longitudinal direction may have a rotational symmetry relationship.
[3] In the above-described invention, the wire may have a non-circular cross-sectional shape, and the wire may be twisted in a circumferential direction of the wire.
[4] In the above-described invention, the cross-sectional shape of the wire may include an oval shape, a semi-circular shape, or an n-polygonal shape (n is a natural number from 3 to 8).
[5] In the above-described invention, a cross-sectional shape at one position in the longitudinal direction and a cross-sectional shape at the other position in the longitudinal direction may be different from each other.
[6] In the above-described invention, a cross-sectional area at one position in the longitudinal direction and a cross-sectional area at the other position in the longitudinal direction may be different from each other.
[7] In the above-described invention, the wire may have a columnar shape having at least one of the concave portion and the convex portion.
[8] In the above-described invention, at least one of the concave portion and the convex portion may include at least one of a wall and a groove formed on an outer surface of the wire, and an extending direction of at least one of the groove and the wall may include at least the circumferential direction of the wire as an element.

[9] A heat exchanger according to the invention is a heat exchanger including: an assembly which is obtained by bundling a plurality of the above-described wires; and a casing which accommodates the assembly.

[10] In the above-described invention, the casing may include a first opening located at one end portion and a second opening located at the other end portion, and a direction from the first opening to the second opening may substantially match the extending direction of the assembly.

[11] A magnetic heat pump device according to the invention is a magnetic heat pump device comprising: at least one of the above-described heat exchangers; a magnetic field changer configured to apply a magnetic field to the magnetocaloric material and change the magnitude of the magnetic field; first and second external heat exchangers respectively connected to the heat exchanger through a pipe; and a fluid supplier configured to supply a fluid from the heat exchanger to the first or second external heat exchanger in synchronization with the operation of the magnetic field changer.

EFFECT OF THE INVENTION

In the invention, the outer surface of the wire partially has at least one of the concave portion and the convex portion in the longitudinal direction of the wire. Accordingly, since a flow of a fluid flowing on the surface of the wire becomes turbulent and a heat transfer rate between the wire and the fluid can be enhanced, it is possible to obtain a wide temperature span.

BRIEF DESCRIPTION OF DRAWINGS

Fig. 1 is a diagram illustrating an overall configuration of a magnetic heat pump device in a first embodiment of the invention and is a diagram illustrating a state where a piston is located at a first position;

Fig. 2 is a diagram illustrating an overall configuration of the magnetic heat pump device in the first embodiment of the invention and is a diagram illustrating a state where the piston is located at a second position;

Fig. 3 is an exploded perspective view illustrating a configuration of an MCM heat exchanger in the first embodiment of the invention;

Fig. 4 is a cross-sectional view taken along the extending direction of the MCM heat exchanger in the first embodiment of the invention and is a cross-sectional view taken alone a line IV-IV of Fig. 3;

Fig. 5 is a cross-sectional view taken along a line V-V of Fig. 4;

Fig. 6 is a perspective view illustrating a wire in the first embodiment of the invention;

Fig. 7(A) is an end view when the wire is cut along a line VIIA-VIIA of Fig. 6 and Fig. 7(B) is an end view when the wire is cut along a line VIIB-VIIB of Fig. 6;

Fig. 8 is an end view when the wire is cut along a line VIII-VIII of Fig. 6;

Figs. 9(A) to 9(L) are end views illustrating a modified example of the wire in the first embodiment of the invention;

Fig. 10 is a side view illustrating a wire in a second embodiment of the invention;

Fig. 11(A) is a cross-sectional view when the wire is cut along a line XIA-XIA of Fig. 10 and Fig. 11(B) is a cross-sectional view when the wire is cut alone a line XIB-XIB of Fig. 10;

Fig. 12 is a cross-sectional view when the wire is cut along a line XII-XII of Fig. 10; and

Figs. 13(A) to 13(E) are side views illustrating a modified example of the wire in the second embodiment of the invention.

BEST MODE(S) FOR CARRYING OUT THE INVENTION

Hereinafter, a first embodiment of the invention will be described with reference to the drawings.

«First Embodiment»

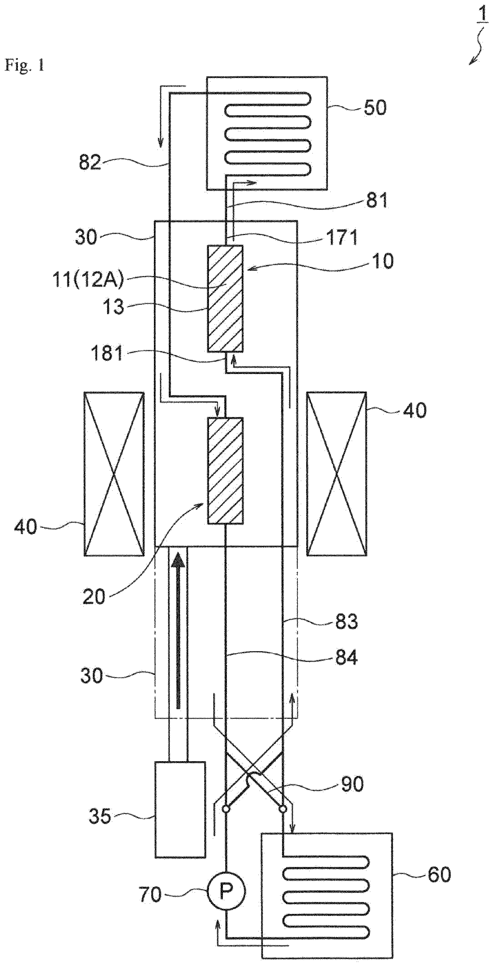

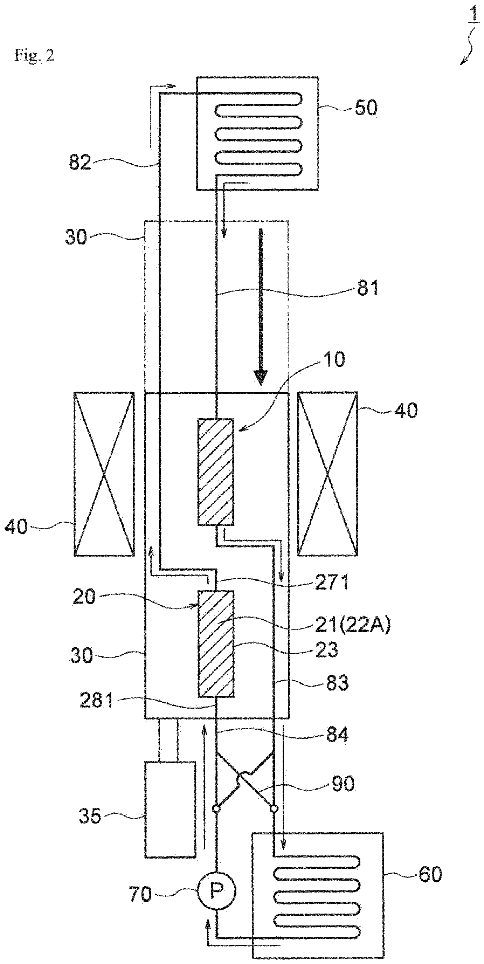

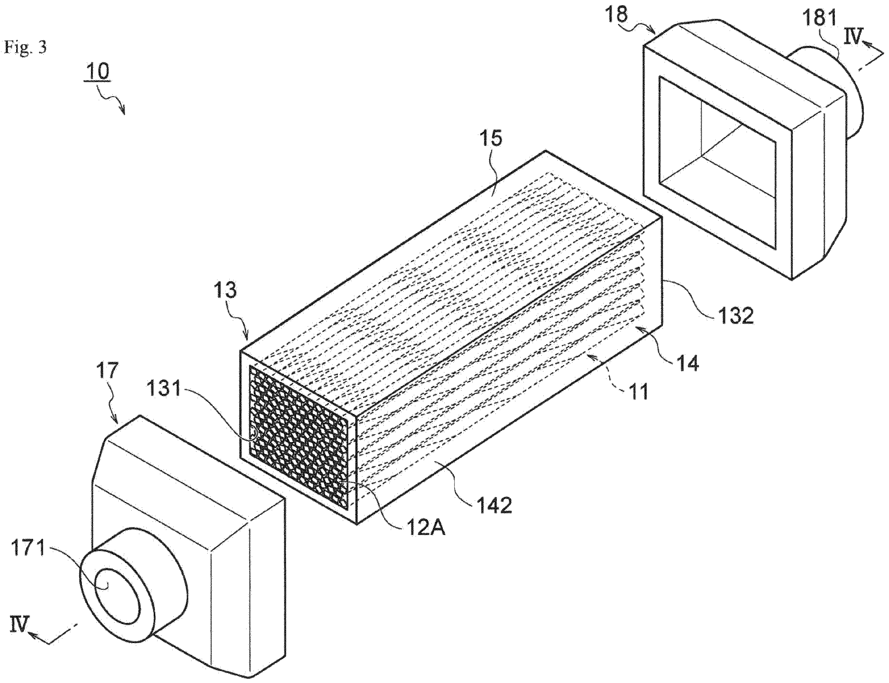

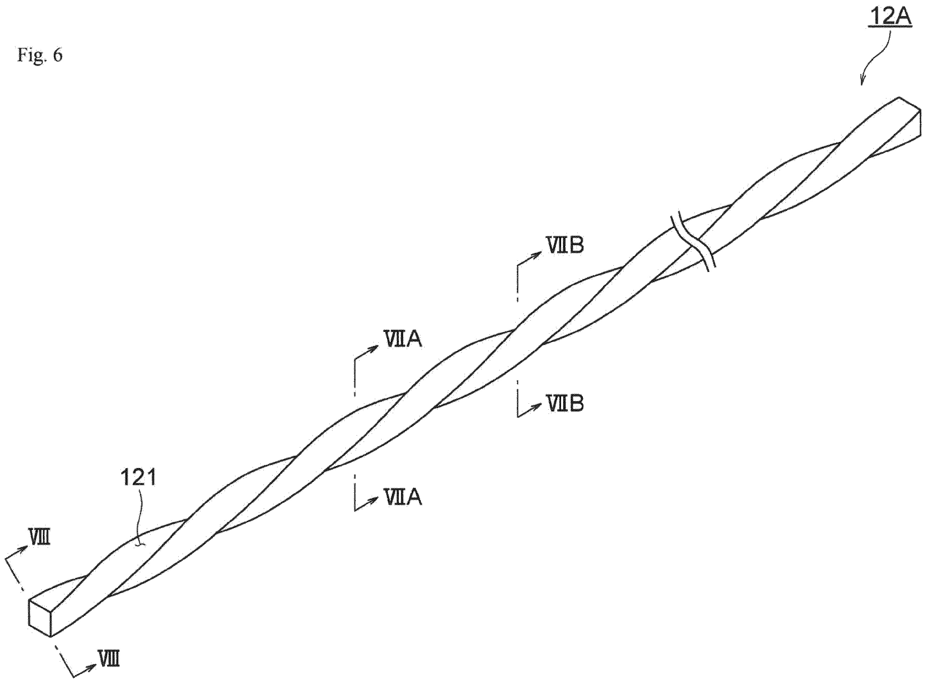

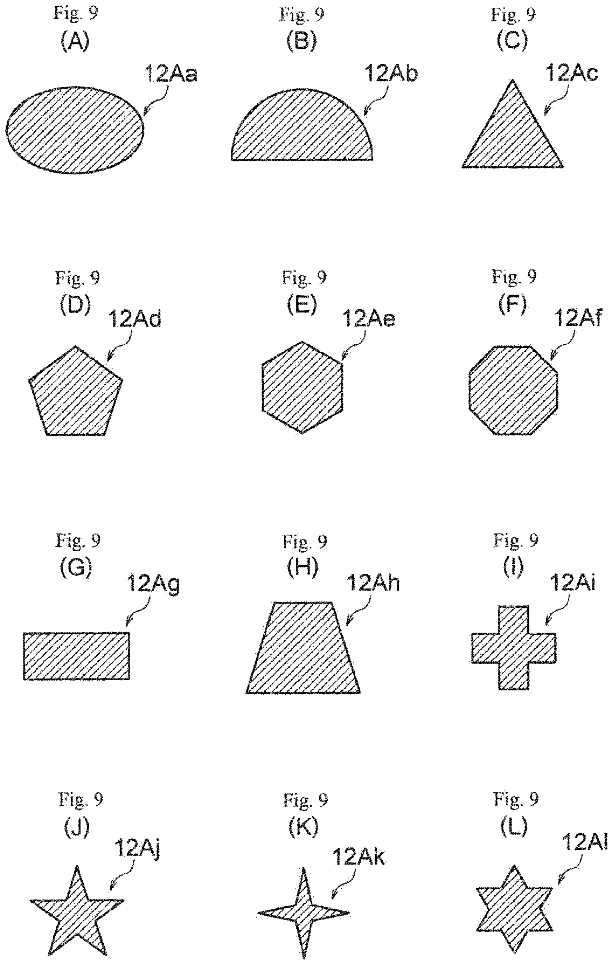

Figs. 1 and 2 are diagrams illustrating an overall configuration of a magnetic heat pump device in the first embodiment of the invention, Figs. 3 to 5 are diagrams illustrating an MCM heat exchanger in the first embodiment of the invention, and Figs. 6 to 8 are diagrams illustrating a wire in the first embodiment of the invention. Figs. 9(A) to 9(L) are cross-sectional views illustrating a modified example of the wire in the first embodiment of the invention.

A magnetic heat pump device 1 of this embodiment is a heat pump device using a magnetocaloric effect and includes, as illustrated in Figs. 1 and 2, first and second MCM heat exchangers 10 and 20, a piston 30, a permanent magnet 40, a low temperature side heat exchanger 50, a high temperature side heat exchanger 60, a rotary pump 70, pipes 81 to 84, and a switching valve 90.

The first and second MCM heat exchangers 10 and 20 of this embodiment correspond to an example of the heat exchanger of the invention, the piston 30 and the permanent magnet 40 of this embodiment correspond to an example of a magnetic changer of the invention, the low temperature side heat exchanger 50 and the high temperature side heat exchanger 60 correspond to an example of first and second external heat exchangers of the invention, the pipes 81 to 84 of this embodiment correspond to an example of a pipe of the invention, and the pump 70 and the switching valve 90 of this embodiment correspond to an example of a fluid supplier of the invention.

The first MCM heat exchanger 10 includes, as illustrated in Figs. 3 to 5, an assembly 11 which includes a plurality of wires 12A, a tubular casing (container) 13 which accommodates the assembly 11, and terminal members 17 and 18 which are connected to both ends of the casing 13. Since the first MCM heat exchanger 10 and the second MCM heat exchanger 20 have the same structure, only the configuration of the first MCM heat exchanger 10 will be described below and the description of the configuration of the second MCM heat exchanger 20 will be omitted.

The wire 12A of this embodiment corresponds to an example of the wire of the invention, the assembly 11 of this embodiment corresponds to an example of the assembly of the invention, and the casing 13 of this embodiment corresponds to an example of the casing of the invention.

The wire 12A is composed of a magnetocaloric material (MCM) having a magnetocaloric effect. When a magnetic field is applied to the wire 12A formed of the MCM, magnetic entropy decreases as electron spins are aligned and the wire 12A generates heat so that a temperature rises. On the other hand, when the magnetic field is removed from the wire 12A, the magnetic entropy increases as the electron spins become cluttered and the wire 12A absorbs heat so that a temperature falls.

The MCM forming the wire 12A is not particularly limited as long as it is a magnetic body. However, a magnetic body having a Curie temperature (Curie point) in a normal temperature range of about 10°C to 30°C and exerts a high magnetocaloric effect in a normal temperature range is desirable. Detailed examples of such MCMs include gadolinium (Gd), gadolinium alloy, lanthanum-iron-silicon (La-Fe-Si) based compounds, and the like.

As illustrated in Figs. 6 to 7(B), the wire 12A has a square cross-sectional shape when the wire 12A is cut along a direction substantially orthogonal to the longitudinal direction of the wire 12A. Further, the wire 12A is twisted in the circumferential direction of the wire 12A when rotating in the opposite directions at both ends of the wire 12A using the center of the wire 12A as a rotation axis. The "square cross-sectional shape" in this embodiment also includes those having slight deformation by twisting (for example, those having side edges curved slightly inward by twisting). Further, a method of forming the wire 12A is not limited to the method of twisting a linear wire. For example, a straight wire may be pressed or rolled into a twisted shape using a metal mold or the like or a wire may be extruded into a twisted shape.

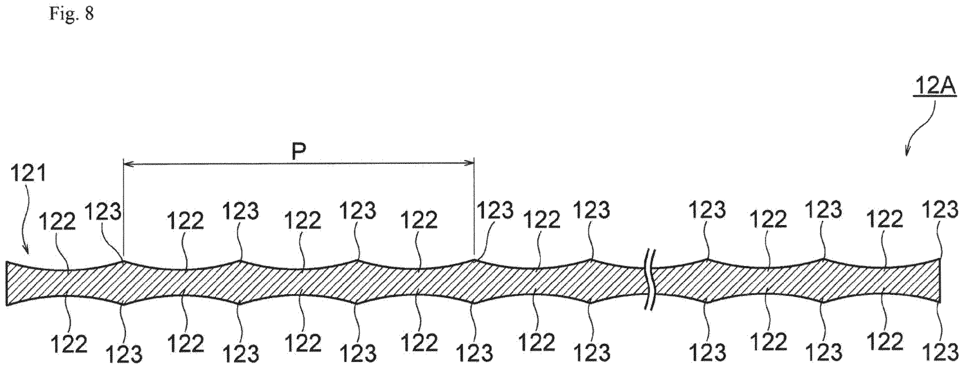

In this way, in this embodiment, since the wire 12A is twisted, an outer surface 121 of the wire 12A partially includes a concave portion 122 and a convex portion 123 in the longitudinal direction of the wire 12A as illustrated in Fig. 8. That is, in this embodiment, the wire 12A has a cross-sectional shape in which the outer surface 121 is partially provided with the concave portion 122 and the convex portion 123 when the wire is cut along the longitudinal direction of the wire 12A. The convex portion 123 is formed by the ridge of the wire 12A and protrudes in the radial direction of the wire 12A. On the contrary, the concave portion 122 is formed by surfaces between the ridges of the wire 12A and is recessed in the radial direction of the wire 12A. In this embodiment, since the concave portion 122 and the convex portion 123 are formed by twisting the wire 12A, the concave portion 122 and the convex portion 123 are periodically and alternately arranged in the longitudinal direction of the wire 12A. Fig. 8 is a cross-sectional view when the wire 12A is cut along the longitudinal direction of the wire 12A.

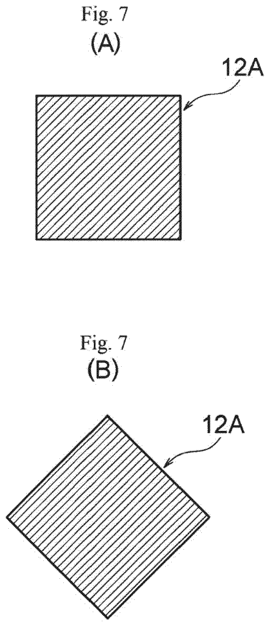

Further, in this embodiment, since the wire 12A having a square cross-sectional shape (that is, a non-circular cross-sectional shape) is twisted, the cross-sectional shape at one position (for example, a line VIIA-VIIA illustrated in Fig. 6) in the longitudinal direction and the cross-sectional shape at the other position (for example, a line VIIB-VIIB illustrated in Fig. 6) in the longitudinal direction have a rotational symmetry relationship as illustrated in Figs. 7(A) and 7(B). Figs. 7(A) and 7(B) are end views when the wire 12A is cut along a direction substantially orthogonal to the longitudinal direction of the wire 12A.

Although there is no particular limitation, it is desirable that the wire 12A have a diameter in which a diameter of a circumscribed circle circumscribing a rectangular cross-sectional shape of the wire 12A is about 0.05 mm to 3 mm. Further, although there is no particular limitation, it is desirable that a twist pitch P of the wire 12A be about 10 to 50 times longer than the diameter of the circumscribed circle of the wire 12A.

The cross-sectional shape of the wire is not particularly limited to the above-described square shape as long as the shape is non-circular (that is, a shape other than a perfect circle).

For example, as illustrated in Fig. 9(A), a wire 12Aa may have an oval cross-sectional shape. In this case, since the wire 12Aa can be produced only by pressing a wire having a circular cross-sectional shape and then twisting the wire, it is possible to facilitate the production of the wire. The "oval cross-sectional shape" in this embodiment includes those having slight deformation by twisting.

Alternatively, as illustrated in Fig. 9(B), the wire 12Ab may have a semi-circular cross-sectional shape. In this case, since the wire 12Ab can be produced only by forming a wire by a quenching roll method and then twisting the wire, it is possible to facilitate the production of the wire 12Ab. The "semi-circular cross-sectional shape" in this embodiment includes those having slight deformation by twisting.

Alternatively, as illustrated in Figs. 9(C) to 9(F), the wire 12Ac to 12Af may have an n-polygonal cross-sectional shape. Here, n is a natural number of 3 to 8. The cross-sectional shape of the wire is not limited to a regular n-polygon shape. For example, as illustrated in Fig. 9(G), the wire 12Ag may have a rectangular cross-sectional shape. Alternatively, as illustrated in Fig. 9(H), the wire 12Ah may have a trapezoidal cross-sectional shape. Although not specifically illustrated in the drawings, the wire may have a cross-sectional shape of a parallelogram or a rhombus. In this embodiment, the "n-polygonal cross-sectional shape" includes those having slight deformation by twisting (for example, those having side edges curved slightly inward by twisting).

Alternatively, as illustrated in Fig. 9(I), the wire 12Ai may have a cross-shaped cross-sectional shape or the wires 12Aj to 12Al may have a star-shaped cross-sectional shape as illustrated in Figs. 9(J) to 9(L). Since the cross-sectional shapes of the wires 12Ai to 12Al illustrated in Figs. 9(I) to 9(L) have portions recessed inward, it is possible to further improve a turbulence of a fluid generated on the surface of the wire. The "star-shaped cross-sectional shape" in this embodiment includes those having slight deformation by twisting.

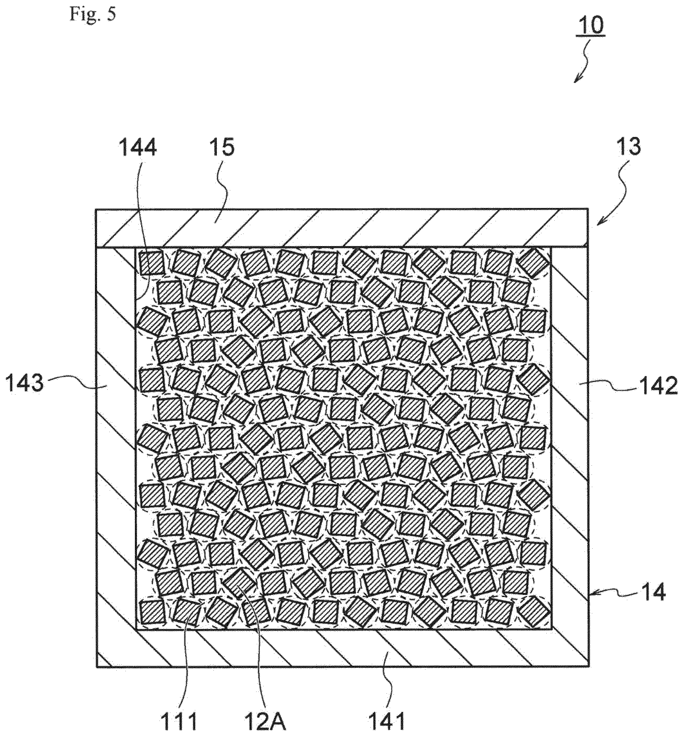

The assembly 11 is formed by bundling a plurality of the wires 12A. The plurality of wires 12A are bundled (overlapped) in a direction intersecting the longitudinal direction of the wire 12A. In other words, the plurality of wires 12A are adjacent to each other so that the side surfaces of the wires 12A contact each other. At this time, since the wire 12A has a non-circular cross-sectional shape and is twisted as described above, a passage 111 (see Fig. 5) is formed between the side surfaces of the wires 12A. The plurality of wires 12 constituting the assembly 11 may have substantially the same wire diameter or may have different wire diameters. Further, in order to facilitate understanding, the assembly 11 is formed by the wires 12A which are fewer than the actual wires in Figs. 3 to 5, but in fact, the assembly 11 includes several thousand to several tens of thousands of wires 12A.

The assembly 11 illustrated in Figs. 3 to 5 is formed by simply bundling the plurality of wires 12A, but the configuration of the assembly is not particularly limited thereto. Although not specifically illustrated, for example, the assembly may be formed by twisting a plurality of wires together. Alternatively, an individual stranded wire may be formed by twisting several wires and the assembly may be formed by bundling the plurality of stranded wires. That is, the "assembly formed by bundling the plurality of wires" in this embodiment also includes "stranded wires."

As a method of twisting the wires, for example, collective twisting, concentric twisting, complex twisting, and the like can be exemplified. The collective twisting is a twisting method in which a plurality of wires are bundled together and twisted in the same direction about the axis of the assembly. The concentric twisting is a twisting method in which a plurality of wires are concentrically twisted around a core wire. The complex twisting is a twisting method in which child stranded wires each of which is obtained by twisting a plurality of wires by concentric twisting or collective twisting are further twisted by concentric twisting or collective twisting.

The casing 13 which accommodates the assembly 11 includes, as illustrated in Figs. 3 to 5, an accommodation portion 14 and a lid portion 15 and has a tubular shape with a rectangular cross-section. The casing 13 is formed such that one end portion is provided with a first opening 131 and the other end portion is provided with a second opening 132.

The accommodation portion 14 includes a bottom portion 141 which constitutes a bottom plate of the casing 13 and a pair of side portions 142 and 143 which constitutes both side walls of the casing 13. An opening 144 is formed between upper ends of the pair of side portions 142 and 143. As a result, the accommodation portion 14 has a square-cornered U-shaped (substantially U-shaped) cross-sectional shape in a cross-section in a direction substantially orthogonal to the axial direction thereof.

The lid portion 15 is a rectangular plate-shaped member. As illustrated in Figs. 3 to 5, the lid portion 15 is fixed to upper ends of the pair of side portions 142 and 143. The opening 144 of the accommodation portion 14 is blocked by the lid portion 15 so that the casing 13 is formed.

The assembly 11 is accommodated in the casing 13 so that the longitudinal direction (the extension direction (the longitudinal direction) of the assembly 11) of the wire 12A constituting the assembly 11 substantially matches the axial direction (a direction extending from the first opening 131 to the second opening 132) of the casing 13. Further, the centers of the first and second openings 131 and 132 are located to be substantially coaxial to the center of the assembly 11. Then, the passage 111 is formed between the wires 12A constituting the assembly 11 (see Fig. 5).

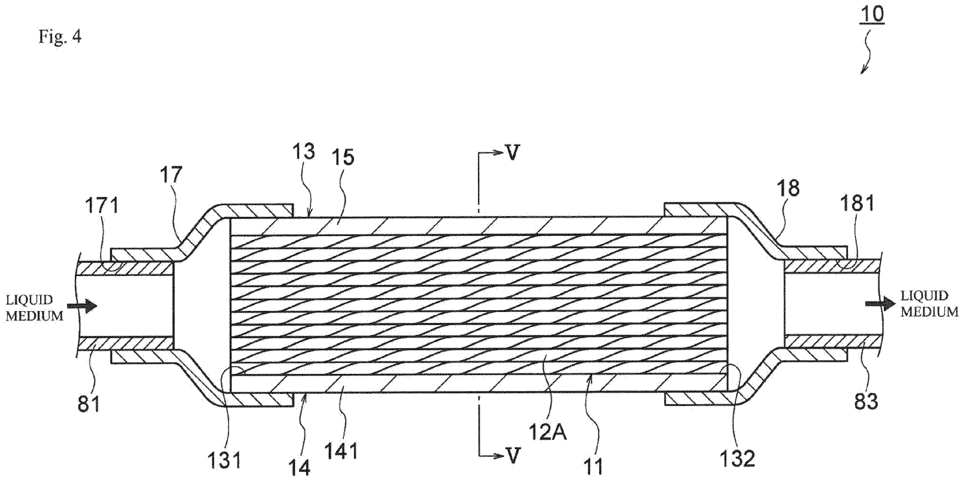

As illustrated in Figs. 3 and 4, one end portion of the casing 13 is inserted into the first terminal member 17 and the first terminal member 17 is fixed to the casing 13. Further, the other end portion of the casing 13 is inserted into the second terminal member 18 and the second terminal member 18 is fixed to the casing 13. As the first and second terminal members (connection members) 17 and 18, for example, a heat shrinkable tube, a resin molded article, a metal processed article, or the like can be used.

The first terminal member 17 includes a first connection port 171 which is smaller than the first opening 131 of the casing 13. As illustrated in Fig. 1, the first connection port 171 communicates with the low temperature side heat exchanger 50 through the first low temperature side pipe 81. The second terminal member 18 also includes a second connection port 181 which is smaller than the second opening 132. The second connection port 181 communicates with the high temperature side heat exchanger 60 through the first high temperature side pipe 83. The centers of the first and second connection ports 171 and 181 are located to be coaxial to the center of the assembly 11.

Similarly, an assembly 21 is also accommodated in the casing 23 of the second MCM heat exchanger 20 (see Fig. 2) and the assembly 21 is formed by bundling a plurality of wires 22A. Then, similarly to the first MCM heat exchanger 10, one end portion of the casing 23 is inserted into the first terminal member and the first terminal member is fixed to the casing 23. Further, the other end portion of the casing 23 is inserted into the second terminal member and the second terminal member is fixed to the casing 23. The second MCM heat exchanger 20 communicates with the low temperature side heat exchanger 50 through the second low temperature side pipe 82 connected to a first connection port 271 of the first terminal member. Meanwhile, the second MCM heat exchanger 20 communicates with the high temperature side heat exchanger 60 through the second high temperature side pipe 84 connected to a second connection port 281 of the second terminal member.

The wire 22A of the second MCM heat exchanger 20 has the same configuration as the wire 12A of the first MCM heat exchanger 10. Further, the casing 23 of the second MCM heat exchanger 20 also have the same configuration as the casing 13 of the first MCM heat exchanger 10, and the terminal members of the second MCM heat exchanger 20 also has the same configuration as the terminal members 17 and 18 of the first MCM heat exchanger 10.

For example, in a case where an air conditioner using the magnetic heat pump device 1 of this embodiment is operated in a cooling mode, an indoor place is cooled by a heat exchange between the low temperature side heat exchanger 50 and the inside air, and heat is emitted to an outdoor place by a heat exchange between the high temperature side heat exchanger 60 and the outside air.

On the contrary, in a case where the air conditioner is operated in a warming mode, the indoor place is warmed by a heat exchange between the high temperature side heat exchanger 60 and the inside air, and heat is absorbed from the outdoor place by a heat exchange between the low temperature side heat exchanger 50 and the outside air.

As described above, a circulation path including four heat exchangers 10, 20, 50, and 60 is formed by two low temperature side pipes 81 and 82 and two high temperature side pipes 83 and 84, and a liquid medium is pressure-fed in the circulation path by the rotary pump 70. As a detailed example of the liquid medium, for example, a liquid such as water, an antifreeze solution, an ethanol solution, or a mixture thereof can be exemplified. The liquid medium of this embodiment corresponds to an example of a fluid of the invention.

Two MCM heat exchangers 10 and 20 are accommodated inside the piston 30. The piston 30 can move in a reciprocating manner between a pair of permanent magnets 40 by the actuator 35. Specifically, the piston 30 can move in a reciprocating manner between a "first position" illustrated in Fig. 1 and a "second position" illustrated in Fig. 2. As an example of the actuator 35, for example, an air cylinder or the like can be exemplified.

Here, the "first position" is a position of the piston 30 when the first MCM heat exchanger 10 is not interposed between the permanent magnets 40 and the second MCM heat exchanger 20 is interposed between the permanent magnets 40. On the contrary, the "second position" is a position of the piston 30 when the first MCM heat exchanger 10 is interposed between the permanent magnets 40 and the second MCM heat exchanger 20 is not interposed between the permanent magnets 40.

Instead of the first and second MCM heat exchangers 10 and 20, the permanent magnet 40 may be moved in a reciprocating manner by the actuator 35. Alternatively, an electromagnet having a coil may be used instead of the permanent magnet 40. In this case, a mechanism of moving the MCM heat exchangers 10 and 20 or the magnet is not necessary. Further, when the electromagnet having the coil is used, the magnitude of the magnetic field applied to the wires 12A and 22A may be changed instead of applying/removing of the magnetic field with respect to the wires 12A and 22A of the MCM heat exchangers 10 and 20.

The switching valve 90 is provided at the first high temperature side pipe 83 and the second high temperature side pipe 84. In synchronization with the operation of the piston 30, the switching valve 90 can switch the liquid medium supply destination of the rotary pump 70 to the first MCM heat exchanger 10 or the second MCM heat exchanger 20 and switch the connection destination of the high temperature side heat exchanger 60 to the second MCM heat exchanger 20 or the first MCM heat exchanger 10.

Next, an operation of the magnetic heat pump device 1 of this embodiment will be described with reference to Figs. 1 and 2.

First, when the piston 30 is moved to the "first position" illustrated in Fig. 1, the wire 12A of the first MCM heat exchanger 10 is demagnetized so that a temperature falls and the wire 22 of the second MCM heat exchanger 20 is magnetized so that a temperature rises.

At the same time, a first path (the rotary pump 70 → the first high temperature side pipe 83 → the first MCM heat exchanger 10 → the first low temperature side pipe 81 → the low temperature side heat exchanger 50 → the second low temperature side pipe 82 → the second MCM heat exchanger 20 → the second high temperature side pipe 84 → the high temperature side heat exchanger 60 → the rotary pump 70) is formed by the switching valve 90.

For this reason, the liquid medium is cooled by the wire 12A of the first MCM heat exchanger 10 of which a temperature decreases due to a demagnetization and the liquid medium is supplied to the low temperature side heat exchanger 50 so that the low temperature side heat exchanger 50 is cooled. At this time, since the liquid medium passes through the passage 111 formed between the wires 12A inside the first MCM heat exchanger 10 so as to contact the wires 12A, the liquid medium is cooled by the wires 12A.

Meanwhile, the liquid medium is heated by the wire 22A of the second MCM heat exchanger 20 of which a temperature increases due to a magnetization and the liquid medium is supplied to the high temperature side heat exchanger 60 so that the high temperature side heat exchanger 60 is heated. At this time, since the liquid medium passes through the passage formed between the wires 22A inside the second MCM heat exchanger 20 so as to contact the wires 22A, the liquid medium is heated by the wires 22A.

Next, when the piston 30 is moved to the "second position" illustrated in Fig. 2, the wire 12A of the first MCM heat exchanger 10 is magnetized so that a temperature rises and the wire 22A of the second MCM heat exchanger 20 is demagnetized so that a temperature falls.

At the same time, a second path (the rotary pump 70 → the second high temperature side pipe 84 → the second MCM heat exchanger 20 → the second low temperature side pipe 82 → the low temperature side heat exchanger 50 → the first low temperature side pipe 81 → the first MCM heat exchanger 10 → the first high temperature side pipe 83 → the high temperature side heat exchanger 60 → the rotary pump 70) is formed by the switching valve 90.

For this reason, the liquid medium is cooled by the wire 22A of the second MCM heat exchanger 20 of which a temperature decreases due to a demagnetization and the liquid medium is supplied to the low temperature side heat exchanger 50 so that the low temperature side heat exchanger 50 is cooled. At this time, since the liquid medium passes through the passage formed between the wires 22A inside the second MCM heat exchanger 20 so as to contact the wires 22A, the liquid medium is cooled by the wire 22A.

Meanwhile, the liquid medium is heated by the wire 12A of the first MCM heat exchanger 10 of which a temperature increases due to a magnetization and the liquid medium is supplied to the high temperature side heat exchanger 60 so that the high temperature side heat exchanger 60 is heated. At this time, since the liquid medium passes through the first passage 111 formed between the wires 12A inside the first MCM heat exchanger 10 so as to contact the wires 12A, the liquid medium is heated by the wires 12A.

When the above-described cycle is repeated, the cold and hot temperature generated by the magnetocaloric effect is accumulated in the assemblies 11 and 21, the side connected to the high temperature side pipe has a high temperature, and the side connected to the low temperature side pipe has a low temperature. Then, when a temperature gradient is formed inside the first and second MCM heat exchangers 10 and 20 and the first and second MCM heat exchangers 10 and 20 reaches a steady state, a uniform temperature span $\Delta T$ is generated between the high temperature end and the low temperature end. The temperature span $\Delta T$ is expressed by the following equation (1). In the following equation (1), $T_h$ indicates the temperature at the high temperature end in the steady state and $T_1$ indicates the temperature at the low temperature end in the steady state.

[Math. 1]

$$\Delta T = T_h - T_l \ldots (1)$$

Here, $\Delta q$ which indicates the heat quantity per unit time from the unit surface area of the magnetocaloric material to the liquid medium is expressed by the following equation (2). In the following equation (2), h indicates the heat exchange rate, $T_s$ indicates the surface temperature of the magnetocaloric material, and $T_f$ indicates the temperature of the liquid medium.

[Math. 2]

$$\Delta q = h(T_s - T_f) \ldots (2)$$

Then, a state where the temperature span $\Delta T$ becomes uniform due to the repeated cycle (a state where the temperature span $\Delta T$ is saturated) is a state where the heat quantity $\Delta q$ of the above-described equation (2) is sufficiently small and a change $\Delta T_f$ of the refrigerant temperature $T_f$ for each cycle disappears. Thus, according to the above-described equation (1), the magnitude of the temperature span $\Delta T$ depends on the magnitude of the heat transfer rate h.

In general, the heat exchange rate h in the above-described equation (2) is determined by the shape of the magnetocaloric material and the filling method. Regarding some shapes such as a granular or linear shape, the heat exchange rate h is formulated by the Nusselt number Nu. That is, when the Nusselt number Nu is large, it can be considered that the heat transfer rate h is also large. Then, when the liquid medium flows at the same speed, the Nusselt number $Nu_1$ of the granular material can be expressed by the following equation (3) and the Nusselt number $Nu_2$ of the wire can be expressed by the following equation (4). In the following equations (3) and (4), Re is Reynolds number and Pr is Prandtl number.
[Math. 3]

$$Nu_1 = 2 + 0.6Re^{0.5}Pr^{0.33} \dots (3)$$

[Math. 4]

$$Nu_2 = 0.023Re^{0.8}Pr^{0.33} \dots (4)$$

According to the above-described equations (3) and (4), since the Nusselt number $Nu_2$ of the wire is smaller than the Nusselt number $Nu_1$ of the granular material, it is understood that the heat transfer rate of the granular is lower than that of the wire. That is, the temperature span $\Delta T$ of the wire not twisted is narrower than that of the granular material. The Nusselt number $Nu_2$ illustrated in the above-described equation (4) is calculated on a condition that the flow of the liquid refrigerant flowing on the surface of the wire is a laminar flow and the heat exchange between the wire surface and the liquid refrigerant is performed by natural convection.

On the contrary, in this embodiment, the concave portion 122 and the convex portion 123 are partially provided in the outer surface 121 of the wire 12A in the longitudinal direction of the wire 12A. Accordingly, the liquid medium flowing on the surface of the wire 12A collides with the concave portion 122 or the convex portion 123 so that forced convection occurs and the flow of the liquid medium becomes turbulent. For this reason, since the heat transfer rate between the wire 12A and the liquid medium can be improved, a wide temperature span can be obtained.

«Second Embodiment»

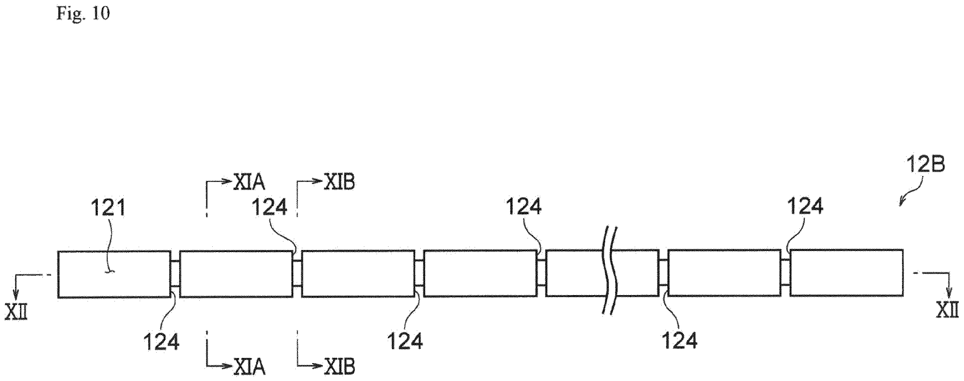

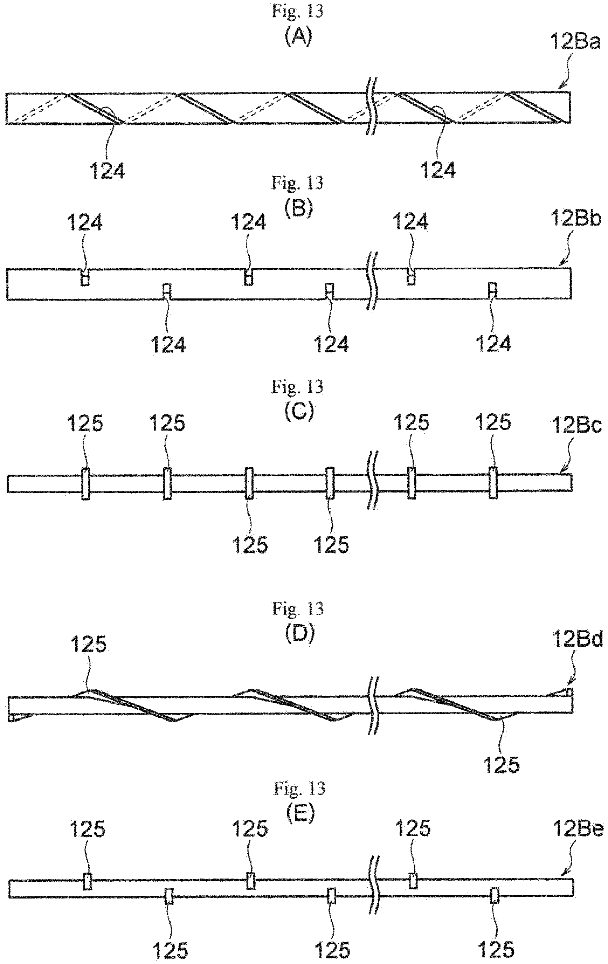

Figs. 10 to 12 are views illustrating a wire in a second embodiment of the invention and Figs. 13(a) to 13(e) are side views illustrating a modified example of the wire in the second embodiment of the invention. In this embodiment, the configuration of the wire is different from that of the first embodiment, but the other configurations are the same as those of the first embodiment. Hereinafter, only a difference between the second embodiment and the first embodiment will be described. Further, the same reference numerals will be given to the same components as those of the first embodiment and a description thereof will be omitted.

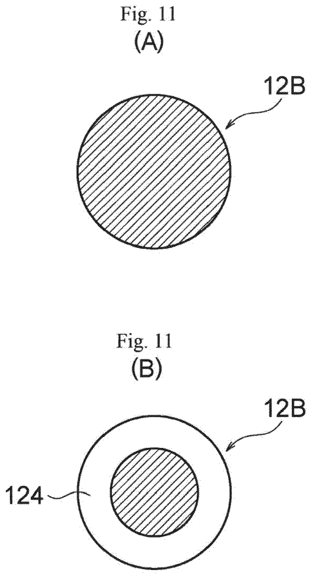

A wire 12B of this embodiment has, as illustrated in Figs. 10 to 11(B), a circular cross-sectional shape when the wire 12B is cut along a direction substantially orthogonal to the longitudinal direction of the wire 12B. Further, the wire 12B is provided with a groove 124 which extends in the circumferential direction and the groove 124 is formed on the entire circumference of the wire 12B. That is, the wire 12B of this embodiment has a columnar shape provided with a plurality of the annular grooves 124. As illustrated in the same drawing, in this embodiment, the plurality of grooves 124 are arranged at the substantially equal intervals in the longitudinal direction of the wire 12B, but the invention is not particularly limited thereto. The wire 12B of this embodiment is formed by cutting, pressing, or rolling a wire.

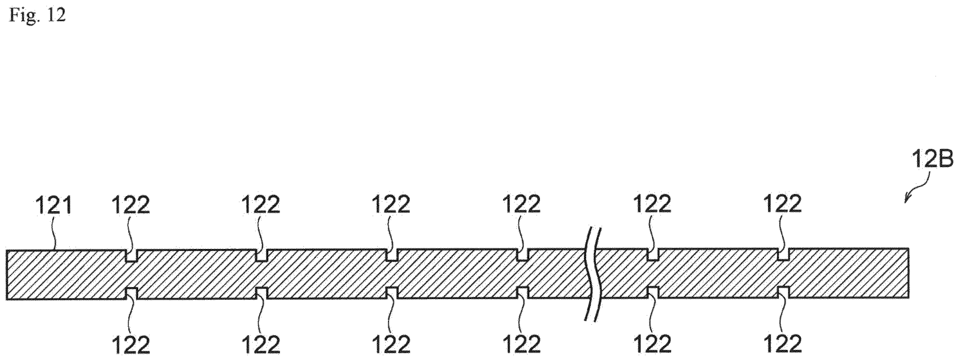

In this way, in this embodiment, since the wire 12B is provided with the groove 124, the outer surface 121 of the wire 12B partially includes the concave portion 122 in the longitudinal direction of the wire 12B as illustrated in Fig. 12. That is, in this embodiment, the wire 12B has a cross-sectional shape in which the outer surface 121 partially includes the concave portion 122 when the wire 12B is cut along the longitudinal direction of the wire 12B. Fig. 12 is a cross-sectional view when the wire 12B is cut along the longitudinal direction of the wire 12B.

Further, in this embodiment, since the wire 12B is provided with the groove 124, the cross-sectional area at one position (for example, a line XIA-XIA of Fig. 10) in the longitudinal direction and the cross-sectional area at the other position (for example, a line XIB-XIB of Fig. 10) in the longitudinal direction are different from each other as illustrated in Figs. 11(A) and 11(B). Further, in this embodiment, since the wire 12B is provided with the groove 124, the cross-sectional shape at one position (for example, a line XIA-XIA of Fig. 10) in the longitudinal direction and the cross-sectional shape at the other position (for example, a line XIB-XIB of Fig. 10) in the longitudinal direction are different from each other as illustrated in Figs. 11(A) and 11(B). Figs. 11(A) and 11(B) are cross-sectional views when the wire 12B is cut along a direction substantially orthogonal to the longitudinal direction of the wire 12B.

In this way, in this embodiment, the concave portion 122 is partially provided in the outer surface 121 of the wire 12B in the longitudinal direction of the wire 12B similarly to the first embodiment. Accordingly, the liquid medium flowing on the surface of the wire 12B collides with the concave portion 122 so that forced convection occurs and the flow of the liquid medium becomes turbulent. For this reason, since the heat transfer rate between the wire 12B and the liquid medium can be increased, a wide temperature span can be obtained.

The shape of the wire is not particularly limited. For example, as illustrated in Fig. 13(A), a wire 12Ba may have a columnar shape provided with a spiral groove 124. The extending direction of the spiral groove 124 includes the circumferential direction of the wire 12Ba as one element. Alternatively, as illustrated in Fig. 13(B), the wire 12Bb may have a columnar shape provided with a plurality of grooves 124 partially formed in the circumferential direction.

Alternatively, as illustrated in Fig. 13(C), a wire 12Bc may have a columnar shape provided with a plurality of annular walls 125. Alternatively, as illustrated in Fig. 13(D), a wire 12Bd may have a columnar shape provided with a spiral wall 125. The extending direction of the spiral wall 125 includes the circumferential direction of the wire 12Bd as one element. Alternatively, as illustrated in Fig. 13(E), a wire 12Be may have a columnar shape provided with a plurality of walls 125 partially formed in the circumferential direction.

Embodiments heretofore explained are described to facilitate understanding of the present invention and are not described to limit the present invention. It is therefore intended that the elements disclosed in the above embodiments include all design changes and equivalents to fall within the technical scope of the present invention.

The configuration of the above-described magnetic heat pump device is an example, and the heat exchanger according to the invention may be applied to another magnetic heat pump device of an AMR (Active Magnetic Refrigeration) type.

For example, the magnetic heat pump device may include one MCM heat exchanger, a magnetic field changer configured to supply a magnetic field to the MCM and change the magnitude of the magnetic field, first and second external heat exchangers respectively connected to the MCM heat exchanger through a pipe, and a fluid supplier configured to supply a fluid to the first or second external heat exchanger from the MCM heat exchanger in synchronization with the operation of the magnetic field changer. Further, in the above-described embodiment, the liquid medium flow direction is changed by using the rotary pump 70 and the switching valve 90, but a reciprocating pump may be used instead of the rotary pump 70 and the switching valve 90.

Further, in the above-described embodiment, an example in which the magnetic heat pump device is applied to the air conditioner for home or an automobile has been described, but the invention is not particularly limited thereto. For example, when an MCM having an appropriate Curie temperature according to the application is selected, the magnetic heat pump device according to the invention may be used for an application in an extremely low temperature range such as a refrigerator or in a high temperature range to some extent.

Further, in this embodiment, the first and second MCM heat exchangers 10 and 20 have the same configurations, but the invention is not particularly limited thereto. Here, the heat exchangers may have different configurations. For example, the first and second MCM heat exchangers 10 and 20 may use wires having different wire diameters. Further, the twisting pitches of the wires may be different from each other.

Further, in this embodiment, the MCM heat exchanger includes a single assembly, but the invention is not particularly limited thereto. For example, a plurality of assemblies may be arranged in series along the extending direction of the MCM heat exchanger. In this case, the plurality of assemblies may have the same configurations or different configurations.

EXPLANATIONS OF LETTERS OR NUMERALS

| | |
|---|---|
| 1: | magnetic heat pump device |
| 10: | first MCM heat exchanger |
| 11: | assembly |
| 111: | passage |
| 12A, 12Aa to 12A1, 12B, 12Ba to 12Be: | wire |
| 122: | concave portion |
| 123: | convex portion |
| 124: | groove |
| 125: | wall |
| 13: | casing |
| 131: | first opening |
| 132: | second opening |
| 14: | accommodation portion |
| 141: | bottom portion |
| 142, 143: | side portion |
| 144: | opening |
| 15: | lid portion |
| 17: | first terminal member |
| 171: | first connection port |

| | |
|---|---|
| 18: | second terminal member |
| 181: | second connection port |
| 20: | second MCM heat exchanger |
| 21: | assembly |
| 22A: | wire |
| 23: | casing |
| 271: | first connection port |
| 281: | second connection port |
| 30: | piston |
| 35: | actuator |
| 40: | permanent magnet |
| 50: | low temperature side heat exchanger |
| 60: | high temperature side heat exchanger |
| 70: | rotary pump |
| 81 to 82: | first and second low temperature side pipes |
| 83 to 84: | third and fourth high temperature side pipes |
| 90: | switching valve |

**Claims**

1.  A wire which is formed of a magnetocaloric material having a magnetocaloric effect, wherein
    an outer surface of the wire partially has at least one of a concave portion and a convex portion in a longitudinal direction of the wire,
    the concave portion is recessed in a radial direction of the wire, and
    the convex portion protrudes in the radial direction.

2.  The wire according to claim 1, wherein
    the wire has a non-circular cross-sectional shape, and
    a cross-sectional shape at one position in the longitudinal direction and a cross-sectional shape at the other position in the longitudinal direction have a rotational symmetry relationship.

3.  The wire according to claim 1 or 2, wherein
    the wire has a non-circular cross-sectional shape, and
    the wire is twisted in a circumferential direction of the wire.

4.  The wire according to claim 2 or 3, wherein
    the cross-sectional shape of the wire includes an oval shape, a semi-circular shape, or an n-polygonal shape (n is a natural number from 3 to 8).

5.  The wire according to claim 1, wherein
    a cross-sectional shape at one position in the longitudinal direction and a cross-sectional shape at the other position in the longitudinal direction are different from each other.

6.  The wire according to claim 1 or 5, wherein
    a cross-sectional area at one position in the longitudinal direction and a cross-sectional area at the other position in the longitudinal direction are different from each other.

7.  The wire according to claim 5 or 6, wherein
    the wire has a columnar shape having at least one of the concave portion and the convex portion.

8.  The wire according to any one of claims 5 to 7, wherein
    at least one of the concave portion and the convex portion includes at least one of a wall and a groove formed on an outer surface of the wire, and
    an extending direction of at least one of the groove and the wall includes at least the circumferential direction of the wire as an element.

9.  A heat exchanger comprising:

an assembly which is obtained by bundling the wires according to any one of claims 1 to 8; and
a casing which accommodates the assembly.

10. A magnetic heat pump device comprising:

at least one heat exchanger according to claim 9;
a magnetic field changer configured to apply a magnetic field to the magnetocaloric material and change the magnitude of the magnetic field;
first and second external heat exchangers respectively connected to the heat exchanger through a pipe; and
a fluid supplier configured to supply a fluid from the heat exchanger to the first or second external heat exchanger in synchronization with the operation of the magnetic field changer.

**Patentansprüche**

1. Ein Draht, der aus einem magnetokalorischen Material hergestellt ist, das einen magnetokalorischen Effekt aufweist, bei dem
eine äußere Oberfläche des Drahtes zum Teil einen konkaven Abschnitt und/oder einen konvexen Abschnitt in einer Längsrichtung des Drahtes aufweist,
der konkave Abschnitt in einer radialen Richtung des Drahtes ausgenommen ist und
der konvexe Abschnitt in der radialen Richtung vorspringt.

2. Der Draht nach Anspruch 1, bei dem
der Draht eine nicht-kreisförmige Querschnittsform hat und
eine Querschnittsform an einer Stelle in der Längsrichtung und eine Querschnittsform an einer anderen Stelle in der Längsrichtung eine rotationssymmetrische Beziehung zueinander haben.

3. Der Draht nach Anspruch 1 oder 2, bei dem
der Draht eine nicht-kreisförmige Querschnittsform hat und
der Draht in einer Umfangsrichtung des Drahtes verdrillt ist.

4. Der Draht nach Anspruch 2 oder 3, bei dem
die Querschnittsform des Drahtes eine ovale Form, eine halbkreisförmige Form oder eine n-polygonale Form aufweist (n ist eine natürliche Zahl zwischen 3 und 8).

5. Der Draht nach Anspruch 1, bei dem
eine Querschnittsform an einer Stelle in der Längsrichtung und eine Querschnittsform an der anderen Stelle in der Längsrichtung voneinander verschieden sind.

6. Der Draht nach Anspruch 1 oder 5, bei dem
eine Querschnittsfläche an einer Stelle in der Längsrichtung und eine Querschnittsfläche an der anderen Stelle in der Längsrichtung voneinander verschieden sind.

7. Der Draht nach Anspruch 5 oder 6, bei dem
der Draht eine säulenförmige Gestalt hat, die den konkaven Abschnitt und/oder den konvexen Abschnitt aufweist.

8. Der Draht nach einem der Ansprüche 5 bis 7, bei dem
der konkave Abschnitt und/oder der konvexe Abschnitt eine Wand und/oder eine Nut aufweist, die an einer äußeren Oberfläche des Drahtes gebildet ist, und
eine Erstreckungsrichtung der Nut und/oder der Wall zumindest die Umfangsrichtung des Drahtes als ein Element enthält.

9. Eine Wärmetauscher mit:

einer Anordnung, die erhalten wird durch Bündeln der Drähte nach einem der Ansprüche 1 bis 8, und
ein Gehäuse, das die Anordnung aufnimmt.

10. Eine magnetische Wärmepumpenvorrichtung mit:

**EP 3 441 987 B1**

wenigstens einem Wärmetauscher nach Anspruch 9;

einem Magnetfeldwandler, der dazu konfiguriert ist, an das magnetokalorische Material ein Magnetfeld anzulegen und die Stärke des Magnetfels zu ändern;

erste und zweite externe Wärmetauscher, die jeweils durch eine Leitung mit dem Wärmetauscher verbunden sind; und

eine Fluidzufuhreinrichtung, die dazu konfiguriert ist, ein Fluid synchron mit der Arbeitsweise des Magnetfeldwandlers von dem Wärmetauscher zu dem ersten oder zweiten externen Wärmetauscher zuzuführen.

## Revendications

1. Fil qui est formé d'un matériau magnétocalorique ayant un effet magnétocalorique, dans lequel
   une surface extérieure du fil a partiellement au moins une partie parmi une partie concave et une partie convexe dans une direction longitudinale du fil,
   la partie concave est évidée dans une direction radiale du fil, et
   la partie convexe fait saillie dans la direction radiale.

2. Fil selon la revendication 1, dans lequel
   le fil a une forme en coupe transversale non circulaire, et
   une forme en coupe transversale dans une position dans la direction longitudinale et une forme en coupe transversale dans l'autre position dans la direction longitudinale ont une relation de symétrie de rotation.

3. Fil selon la revendication 1 ou 2, dans lequel
   le fil a une forme en coupe transversale non circulaire, et
   le fil est torsadé dans une direction circonférentielle du fil.

4. Fil selon la revendication 2 ou 3, dans lequel
   la forme en coupe transversale du fil inclut une forme ovale, une forme semi-ciruclaire ou une forme de polygone à n côtés (n est un nombre naturel de 3 à 8).

5. Fil selon la revendication 1, dans lequel
   une forme en coupe transversale dans une position dans la direction longitudinale et une forme en coupe transversale dans l'autre position dans la direction longitudinale sont différentes l'une de l'autre.

6. Fil selon la revendication 1 ou 5, dans lequel
   une surface en coupe transversale dans une position dans la direction longitudinale et une surface en coupe transversale dans l'autre position dans la direction longitudinale sont différentes l'une de l'autre.

7. Fil selon la revendication 5 ou 6, dans lequel
   le fil a une forme colonnaire ayant au moins une partie parmi la partie concave et la partie convexe.

8. Fil selon l'une quelconque des revendications 5 à 7, dans lequel
   au moins une partie parmi la partie concave et la partie convexe inclut au moins un élément parmi une paroi et une rainure formée sur une surface extérieure du fil, et
   une direction d'extension d'au moins un élément parmi la rainure et la paroi inclut au moins la direction circonférentielle du fil en tant qu'élément.

9. Echangeur de chaleur comportant :

   un ensemble qui est obtenu en regroupant les fils selon l'une quelconque des revendications 1 à 8, et
   un boîtier qui reçoit l'ensemble.

10. Dispositif de pompe à chaleur magnétique comportant :

    au moins un échangeur de chaleur selon la revendication 9,
    un variateur de champ magnétique configuré pour appliquer un champ magnétique au matériau magnétocalorique et faire varier la grandeur du champ magnétique,
    des premier et second échangeurs de chaleur externes respectivement reliés à l'échangeur de chaleur par l'intermédiaire d'un tuyau ; et

un dispositif de fourniture de fluide configuré pour fournir un fluide à partir de l'échangeur de chaleur au premier ou second échangeur de chaleur externe en synchronisation avec le fonctionnement du variateur de champ magnétique.

Fig. 1

Fig. 2

Fig. 3

EP 3 441 987 B1

16

EP 3 441 987 B1

Fig. 4

<u>10</u>

LIQUID
MEDIUM

LIQUID
MEDIUM

Fig. 5

Fig. 6

Fig. 7
(A)

12A

Fig. 7
(B)

12A

Fig. 8

Fig. 9
(A)

12Aa

Fig. 9
(B)

12Ab

Fig. 9
(C)

12Ac

Fig. 9
(D)

12Ad

Fig. 9
(E)

12Ae

Fig. 9
(F)

12Af

Fig. 9
(G)

12Ag

Fig. 9
(H)

12Ah

Fig. 9
(I)

12Ai

Fig. 9
(J)

12Aj

Fig. 9
(K)

12Ak

Fig. 9
(L)

12Al

Fig. 10

Fig. 11
(A)

12B

Fig. 11
(B)

12B

124

Fig. 12

Fig. 13
(A)

12Ba

124          124

Fig. 13
(B)

124          124          124          12Bb

124          124          124

Fig. 13
(C)

125    125              125    125    12Bc

125    125

Fig. 13
(D)

125                                    12Bd

125

Fig. 13
(E)

125          125          125          12Be

125          125          125

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013064588 A

- JP 2017072332 A